# EUROPEAN PATENT APPLICATION

(11) **EP 2 879 331 A1**
(43) Date of publication of application: **03.06.2015**
(21) Application number: 12881960.4
(22) Date of filing: 27.07.2012
(51) Int. Cl.: H04L 12/28

(54) **COMMUNICATION ADAPTOR, CONTROLLER, AND NETWORK SYSTEM**

(71) Applicant: Mitsubishi Electric Corporation, Tokyo 100-8310 (JP)
(72) Inventor: HIBARA Naoyuki, Tokyo 100-8310 (JP); KOIZUMI Yoshiaki, Tokyo 100-8310 (JP); ITO Yoshiaki, Tokyo 100-8310 (JP)
(74) Representative: Pfenning, Meinig & Partner GbR
(86) International application number: PCT/JP2012/069250
(87) International publication number: WO 2014/016968

(57) **Abstract**

A device identification code for identifying an electric device (40) is generated based on electric device information predefined for each electric device (40). Accordingl.y, it becomes unnecessary for a communication adapter (30) to be provided with a memory device storing the device identification code for identifying the electric device (40). A structure of the communication adapter (30) can be therefore simplified, resulting in an avoidance of a network complication. Furthermore, precise identification of the electric device (40) constituting the network can be accomplished using the device identification code.

## Description

### Technical Field

The present disclosure relates to a communication adaptor, a controller, and a network system, and more particularly, to a communication adaptor that connects electric devices to a network, a controller that controls electric devices connected to a network, and a network system including the electric devices and the controller constituting the network.

### Background Art

Internet and home network connected electric devices are connected to such a network via a communication adapter serving as an interface. An example communication adapter that connects an electric device to a network enables a communication between the electric device and the network by an installation of a program according to the electric device to be connected to the network (see, for example, Patent Literature 1 and Patent Literature 2). This type of communication adapters employs the common hardware specification among devices, thereby achieving low costs and stable availability in the market. Hence, the network is operable with flexibility and at low cost.

An identification code is allocated to a communication adapter that connects an electric device to a network. The electric device connected to the network is identified by the identification code allocated to the communication adapter. However, when, for example, the electric device connected to a communication adapter is replaced subsequent to the allocation of the identification code to the communication adapter, the initially allocated identification code occasionally becomes inconsistent with the electric device that corresponds to this identification code. In such a case, it occasionally becomes difficult to accurately identify an electric device over the network.

To address this problem, various technologies have been proposed to achieve precise identification of a communication adapter and of an electric device connected thereto by utilizing both identification code for establishing communication over a network and identification code for identifying solely the electric device (see, for example, Patent Literature 3).

### Citation List

### Patent Literature

Patent Literature 1: Unexamined Japanese Patent Application Kokai Publication No. 2004-229266.
Patent Literature 2: Unexamined Japanese Patent Application Kokai Publication No. 2006-127432.
Patent Literature 3: Unexamined Japanese Patent Application Kokai Publication No. 2008-172570.

### Summary of Invention

### Technical Problem

According to the first technology disclosed in Patent Literature 3, a controller provides, to a communication adapter, a first identification code to establish communication and a second identification code to identify the controller. When a communication is carried out, the controller acquires, via the communication adapter, the second identification code, manufacturer information, device model information, control-property information, and the like. Next, by comparing the acquired information with pre-stored information, a communication target is identified. Accordingly, there is a problem of structural complexity of a device as is necessary to include means for storing the manufacturer information and the like in the controller.

According to the second technology disclosed in Patent Literature 3, an electric device itself also stores an identification code for identifying the local electric device. In this case, it is necessary for the electric device itself to include storage means, whereas the costs of the electric device increase.

Further, according to the technology disclosed in Patent Literature 3, an identification code is necessary for each network when an electric device belongs to a plurality of networks. In this case, when, for example, the byte length and format of the identification code differ network by network, it is necessary for the electric device to include a large-capacity memory that serves as storage means, thereby bringing about a problem that the structure of the electric device is more complex. In addition, when the electric device possesses the identification code, this causes inconvenience of being unable to cope with any unexpected network.

The present disclosure has been made in view of such circumstances above, and it is an objective of the present disclosure to simplify a structure of a device by generating an identification code in a unified format in a network.

### Solution to Problem

To achieve the objectives above, there is provided in accordance with the present disclosure, a communication adapter to connect an electric device to a network, that comprises acquiring means that acquires, from the electric device, device information on the electric device, and identification code generating means that generates, based on the device information, a device identification code for identifying the electric device in the network.

### Advantageous Effects of Invention

According to the present disclosure, electric device information on an electric device is acquired for each electric device, and a device identification code for identifying the electric device over the network is generated based on the electric device information. Hence, without making any alteration to a device structure, the device identification code in a unified format can be generated for each network. Therefore, simplification of the device structure is enabled.

### Brief Description of Drawings

FIG. 1 is a block diagram illustrating a network system according to a first embodiment;
FIG. 2 is a block diagram illustrating a controller and a communication adapter;
FIG. 3 is a flowchart illustrating a process performed by a device identification code generator;
FIG. 4 is a flowchart illustrating a process performed by a device information manager;
FIG. 5 is a block diagram illustrating a communication adapter according to a first modified example;
FIG. 6 is a block diagram illustrating a communication adapter according to a second modified example;
FIG. 7 is a block diagram illustrating a controller according to a second embodiment;
FIG. 8 is a block diagram a controller according to a modified example; and
FIG. 9 is a block diagram illustrating a network system according to a modified example.

### Description of Embodiments

### (First Embodiment)

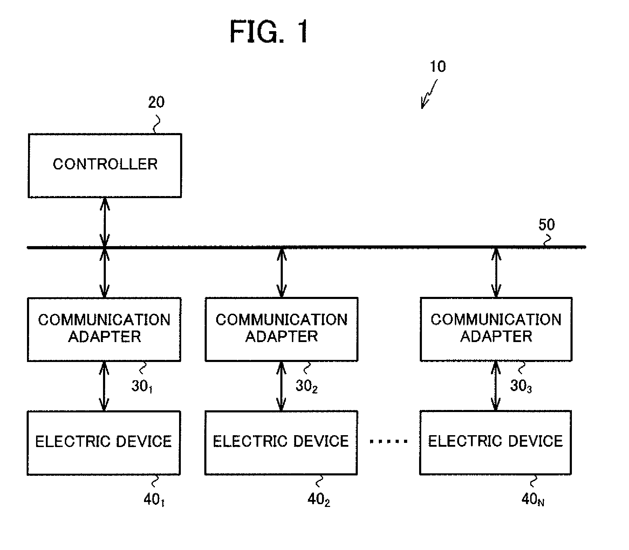

Hereinafter, a first embodiment of the present disclosure will be described with reference to drawings. FIG. 1 is a block diagram illustrating a network system 10 according to this embodiment. The network system 10 includes a plurality of electric devices 40 connected to a communication network 50, such as the Internet or a local area network, via a communication adapter 30, and a controller 20 that controls these electric devices 40.

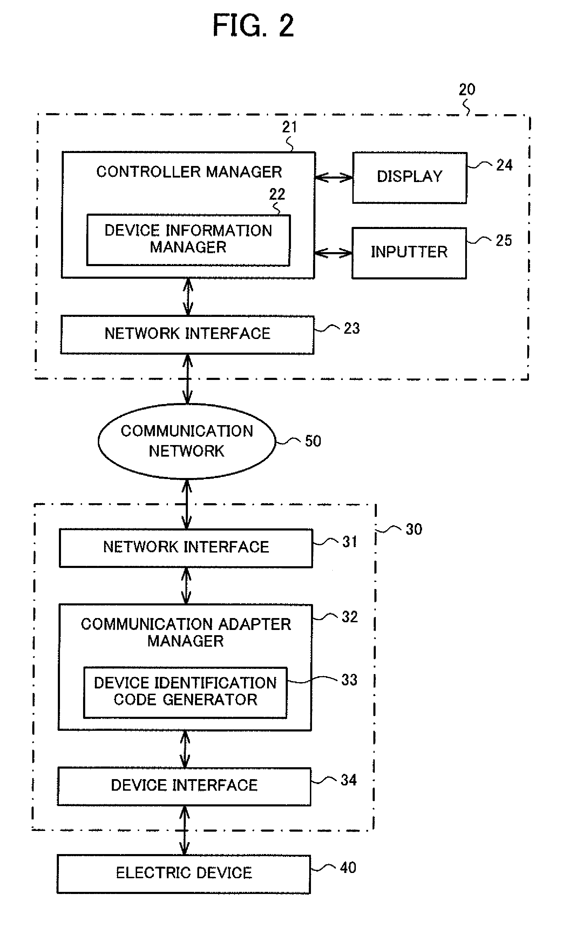

FIG. 2 is a block diagram illustrating the controller 20 and the communication adapter 30. As shown in FIG. 2, the communication adapter 30 includes a network interface 31, a communication adapter manager 32, and a device interface 34.

The network interface 31 communicably connects the communication adapter manager 32 to the communication network 50. This network interface 31 includes a local area network (LAN) interface.

The communication adapter manager 32 is a computer constituted by a CPU, a main memory, and an auxiliary memory. The communication adapter manager 32 runs a program that is stored in the auxiliary memory. Next, the communication adapter manager 32 generates a device identification code for identifying the electric device 40 connected to the communication network 50. For convenience of explanation, it is presumed that, in the following description, a function of generating the device identification code by having the CPU to execute a program is performed by a device identification code generator 33. In addition, the communication adapter manager 32 outputs, to the electric device 40 via the device interface 34, the information acquired via the network interface 31.

Still further, a node identification code for identifying the communication adapter 30 is allocated to the communication adapter manager 32. This node identification code enables a unique identification of the communication adapter 30 connected to the communication network 50. The node identification code is, for example, allocated individually by a user or is allocated to each communication adapter manager 32 by the controller 20 without a duplication.

The device interface 34 communicably connects the electric device 40 with the communication adapter 30. This device interface 34 includes a serial interface or a parallel interface.

The electric device 40 is an electric device represented by, for example, an air conditioning device or a lighting device.

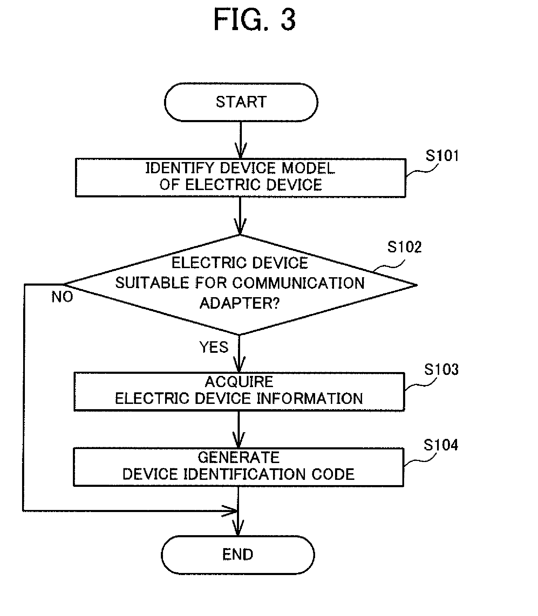

Next, a device identification code generating operation of the device identification code generator 33 will be described. FIG. 3 is a flowchart illustrating a sequence of process steps performed by the device identification code generator 33. As shown in FIG. 3, when connected to the electric device 40, the device identification code generator 33 communicates with the electric device 40 via the device interface 34. Subsequently, the device identification code generator 33 identifies a device model of the electric device 40 (step S101). The device model represents a type of the electric device 40, and the device identification code generator 33 identifies, based on information notified by the electric device 40, whether the electric device 40 is, for example, an air conditioning device or a lightning device.

Next, the device identification code generator 33 determines whether or not the electric device 40 connected to the communication adapter 30 is suitable for the communication adapter 30 (step S 102). This determination is performed based on, for example, whether or not a program installed on the communication adapter 30 is compatible with the device model identified in the step S101. When the electric device 40 is not suitable for the communication adapter 30 (step S102; No), the device identification code generator 33 terminates the process. In this case, it is necessary for the user to take measures such as program installation on the communication adapter 30 compatible with the electric device 40.

Conversely, when the electric device 40 is suitable for the communication adapter 30 (step S102; Yes), the device identification code generator 33 communicates with the electric device 40 via the device interface 34, and acquires electric device information from the electric device 40 (step S103). This electric device information includes, for example, an identification code for identifying a manufacturer of the electric device 40, an identification code for identifying the device model of the electric device 40, and a manufacture's serial number of the electric device 40.

Next, the device identification code generator 33 generates, based on the acquired device information, a device identification code for identifying the electric device 40 (step S104).

The steps of generating the device identification code are specified by the program run by the communication adapter manager 32. The device identification code generator 33 extracts portions of information of a manufacturer identification code, a device identification code, and a manufacturer's serial number, respectively, serving as the electric device information described above. Next, the pieces of extracted information are combined to generate the device identification code, such that the electric device 40 is identified. The device identification code generated in this way is used, thereby enabling a unique identification of the electric device 40 connected to the communication network 50.

The device identification code generator 33 stores, upon generating the device identification code, information on the device identification code in the auxiliary memory that constitutes the communication adapter manager 32.

Returning to FIG. 2, the controller 20 operates the electric devices 40 connected to the communication network 50 individually or cooperatively. In addition, the controller 20 displays individual status of the electric devices 40. As shown in FIG. 2, the controller 20 includes a controller manager 21, a network interface 23, a display 24, and an inputter 25.

The controller manager 21 is a computer constituted by a CPU, a main memory, and an auxiliary memory. The controller manager 21 runs a program stored in the auxiliary memory. The controller manager 21 acquires and manages both of a node identification code of the communication adapter 30 that is connected to the communication network 50, and a device identification code for identifying the electric device 40. For convenience of explanation, it is presumed below that the function of acquiring and managing the device identification code by having the CPU to run the program is performed by the device information manager 22. In addition, upon receiving an instruction input by the user via the inputter 25, the controller manager 21 identifies, based on the node identification code and the device identification code, the electric device to be controlled, and performs a control according to the instruction.

The network interface 23 communicably connects the controller manager 21 to the communication network 50. This network interface 23 includes a local area network (LAN) interface.

The display 24 includes a display unit, such as a liquid crystal display (LCD). The display 24 displays the device identification code, the status of the electric device 40 that is connected to the communication network 50, the status of the communication adapter 30, and the like.

The inputter 25 includes a touch panel and input keys. A user instruction is notified to the controller manager 21 via this inputter 25.

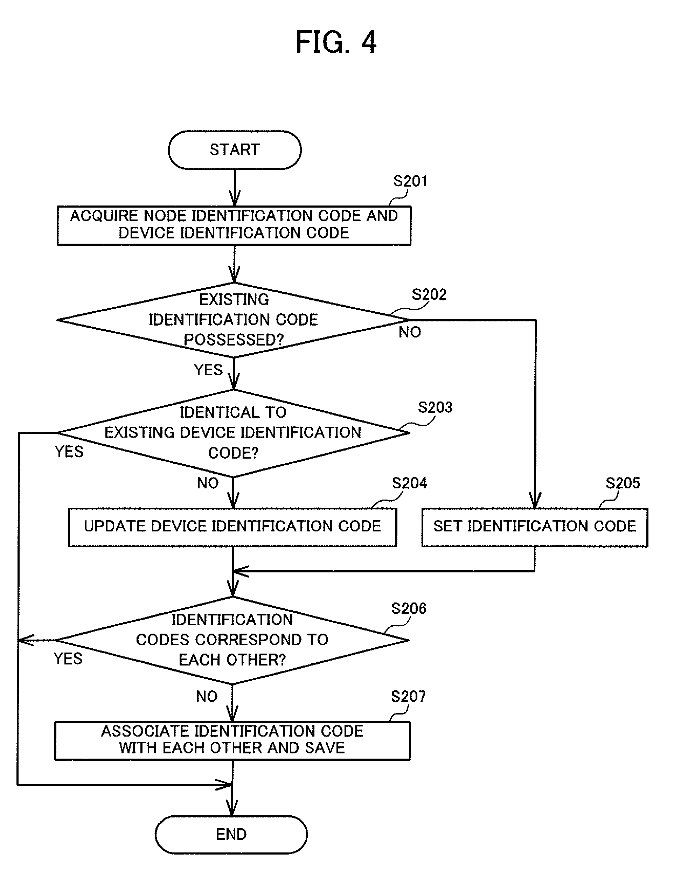

Hereinafter, an identification-code setting operation of the device information manager 22 will be described. FIG. 4 is a flowchart illustrating a sequence of process steps executed by the device information manager 22. As shown in FIG. 4, when the electric device 40 is connected to the communication network 50, the device information manager 22 acquires, from the communication adapter 30 via the network interface 23, information on the node identification code for identifying the communication adapter 30 and the device identification code generated by device identification code generator 33 of the communication adapter 30 (step S201).

Next, when the device information manager 22 possesses information on the node identification code and that of the device identification code (step S202; Yes), the device information manager 22 determines whether or not these existing node identification code and device identification code respectively match the new node identification code and device identification code acquired in the step S201 (step S203).

When the existing node identification code and device identification code match the new node identification code and device identification code, respectively (step S203; Yes), the device information manager 22 terminates the process. Conversely, when details on the existing node identification code and device identification code do not match those of the new node identification code and device identification code, respectively (step S203; No), the device information manager 22 updates the details of the node identification code and that of the device identification code with the details of the new node identification code and that of the new device identification code.

In addition, when the device information manager 22 does not possess information on the node identification code of the communication adapter 30 and that of the device identification code (step S202; No), the device information manager 22 sets and stores the new node identification code and device identification code acquired in the step S201 as identification information to identify the electric device 40 in a later communication (step S205).

Next, the device information manager 22 determines whether or not the node identification code corresponds to the device identification code (step S206). This determination is carried out by determining whether or not the device identification code corresponding to the new node identification code matches the device identification code that corresponds to the device identification code of another communication adapter 30, by comparing the node identification code with the device identification code in each of the electric devices 40₁ to 40_{N} stored in the auxiliary memory that constitutes the controller manager 21.

As is clear from FIG. 1, when the new node identification code is utilized, for example, to identify the communication adapter 30₁, and when the new device identification code represents the device identification code of the electric device 40₂ connected to the communication adapter 30₂ other than the communication adapter 30₁, the device information manager 22 determines that the new node identification code do not corresponds to the new device identification code. Conversely, when the new node identification code is, for example, utilized to identify the communication adapter 30₁, and when the new device identification code represents the device identification code of the electric device 40₁ connected to the communication adapter 30₁, the device information manager 22 determines that the new node identification code corresponds to the new device identification code.

When the new node identification code corresponds to the new device identification code (step S206; Yes), the device information manager 22 terminates the process. Accordingly, the existing node identification code and the existing device identification code are set as identification information in order to identify the electric device 40. Conversely, when the new node identification code does not correspond to the new device identification code (step S206; No), the device information manager 22 associates the new node identification code with the new device identification code and stores those pieces of information in the auxiliary memory that constitutes the controller manager 21, and terminates the sequence of process steps. In this way, the new node identification code and the new device identification code are set as identification information to identify the electric device 40.

As discussed above, according to this embodiment, the communication adapter manager 32 acquires the electric device information predefined for each electric device, more specifically, the communication adapter manager 32 acquires, from the electric device 40 via the device interface 34, the identification code for identifying the manufacturer of the electric device 40, the identification code for identifying the device model of the electric device 40, the manufacture's serial number of the electric device 40, and the like. In addition, the device identification code is generated based on this electric device information so as to identify the electric device 40.

Accordingly, the electric device information on the electric device is acquired for each electric device, and based on the electric device information, the device identification code for identifying the electric device over the network is thus generated. Hence, without making any alteration to a device structure, the device identification code in a unified format can be generated for each network. Additionally, it becomes unnecessary to provide, on the communication adapter 30, any memory device to store the device identification code for identifying the electric device 40. Therefore, simplification of the structure of the communication adapter 30 is accomplished. Further, it is capable of precisely identifying the electric device 40 that constitutes the network by utilizing the device identification code generated by the communication adapter manager 32 of the communication adapter 30.

According to this embodiment, even if the electric device 40 connected to the communication adapter 30 is replaced, the device identification code for identifying this electric device 40 is generated when the electric device 40 is connected to the communication adapter 30. Hence, even if there is a change in combination of the communication adapter 30 and the electric device 40 connected to the communication adapter 30, the electric device 40 can be uniquely identified over the network.

According to this embodiment, the network system 10 is configured by having the electric devices 40 connected one another via the communication adapter 30. Thus, even if the specification of each of the electric devices 40 constituting the network system 10 is different, a network of electric devices can be established by utilizing the common communication adapter 30. Hence, a flexible operation of the network system 10 is enabled.

According to this embodiment, the device identification code for identifying this electric device 40 is generated when the electric device 40 is connected to the communication adapter 30. Thus, even if the network system 10 is constituted by a plurality of the same type of electric devices 40, the controller 20 is capable of accurately identifying, based on the device identification code, the electric device 40 over the network.

According to this embodiment, the device identification code for identifying the electric device 40 is generated when the electric device 40 is connected to the communication adapter 30. Thus, when, for example a breakdown controller 20 is replaced with a new controller 20, the device identification code of each electric device is automatically acquired by such a new controller 20. Hence, it becomes unnecessary to have, for example, an operator to upload data on the device identification code when replacing the device.

Note that the types of necessary information in order to generate the device identification code, and a code generating method by a device identification code generator 26 are predefined for each device model by a communication adapter manager 104.

The types of information necessary to generate the device information code includes a manufacturer identification code of the electric device, a device model identification code, and a manufacturer's serial number. In this embodiment, the device identification code for identifying the electric device 40 is generated by combining respective pieces of device information, but the device identification code containing a hash value calculated for each device using a hash function may be generated.

In this embodiment, generation of the device identification code by the communication adapter manager 32 that constitutes the communication adapter 30 was described. However, the present disclosure is not limited to such case, and when, for example, the device identification code is allocated to the electric device 40 in advance, the controller 20 may acquire and manage this device identification code.

In this embodiment, generation of the device identification based on the device information was described. This device information may be, for example, a code that is set by a DIP switch installed in the electric device. The communication adapter manager 32 is capable of generating the device identification code by combining the identification code for identifying the manufacturer of the electric device 40, the identification code for identifying the device model of the electric device 40, the manufacture's serial number of the electric device 40, and the code specified by the DIP switch.

Further, the device identification code identifiable of each electric device can be generated based on the code that is specified by the DIP switch even if there is no inconsistency in the device information of the electric device connected to the network among the electric devices, or even if the electric device possesses no device information, such as the manufacture's serial number.

Still further, when the device identification code that uniquely identifies the electric device 40 cannot be generated based only on the predefined electric device information possessed by the electric device 40, the device identification code may be generated by combining the identification code for identifying the manufacturer of the electric device 40, the identification code for identifying the device model of the electric device 40, the manufacture's serial number of the electric device 40, and a random number.

The device identification code for identifying the electric device 40 that constitutes the network needs simply to accomplish a unique identification of the electric device 40 over the network. Thus, the necessary information to generate the device identification code is not limited to the above-described identification code for identifying the manufacturer and the like. In addition, the device identification code may be generated by the process steps in accordance with the device model of the electric device 40 and the manufacturer thereof

In this embodiment, a case in which the communication adapter 30 is connected only to the communication network 50 is described. However, the present disclosure is not limited to this case, and the communication adapter 30 may be connected to two or more networks, such as the Internet and the local area network. In this scenario, the communication adapter 30 may generate the device identification code for each network.

According to this embodiment, the controller manager 21 that constitutes the controller 20 determines, upon acquiring the node identification code and the device identification code, whether or not the node identification code corresponds to the device identification code (step S206). Next, the node identification code and the device identification code are updated in accordance with the determined result. When the electric device 40 connected to the communication adapter 30 is replaced with the same type of electric device 40, more specifically, when an air conditioner connected to the communication adapter 30 is replaced with a new air conditioner, a device model of the electric device 40 that is specified by the node identification code and the device identification code remains the same. In this case, the controller manager 21 determines that the electric device 40 has been replaced, and the original device identification code that was given to the replaced electric device may be allocated to the new electric device 40.

When executing the process in the step S207 to update the correspondence between the node identification code and the device identification code, the controller manager 21 that constitutes the controller 20 may notify, through the display 24, the user of the determined result in the step S206, and may prompt the user to confirm such an update.

In this embodiment, the controller manager 21 runs the pre-stored program. However, the present disclosure is not limited to this case, and the controller manager 21 may run a program that is downloaded from a device, such as the controller 20, via the communication network 50.

### (First Modified Example)

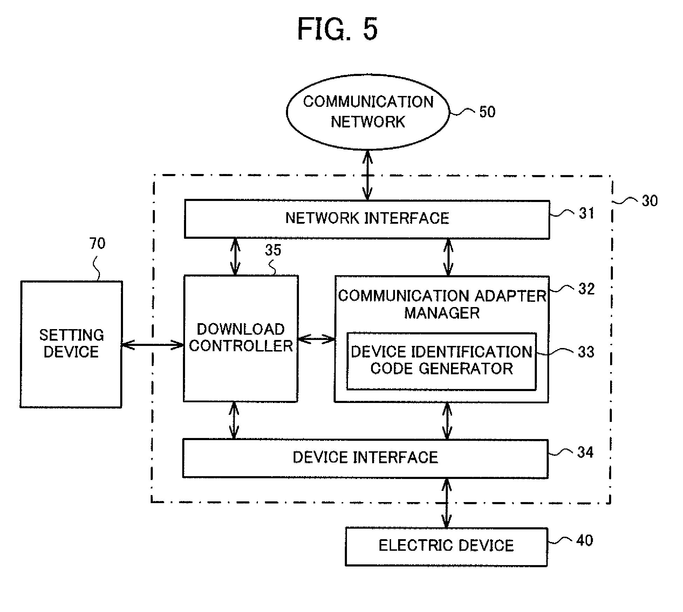

Hereinafter, a first modified example of the communication adapter 30 will be described. As shown in FIG. 5, a communication adapter 30 according to the first modified example includes a download controller 35. When, for example, the communication adapter manager 32 is constituted by hardware resources, the download controller 35 downloads a control program to be run by the communication adapter manager 32 from the server or the like connected to the communication network 50 via the network interface 31. Subsequently, the control program is uploaded to the communication adapter manager 32. By running the program, the communication adapter manager 32 can serve as the device identification code generator 33.

Further, when the control program is stored in the electric device 40, the download controller 35 downloads, from the electric device 40 via the device interface 34, the control program run by the communication adapter manager 32. Next, the control program is uploaded to the communication adapter manager 32. By running this program, the communication adapter manager 32 can serve as the device identification code generator 33.

Still further, the download controller 35 may download the control program from a setting device 70 that is directly connected to the download controller 35, and upload the control program to the communication adapter manager 32. The setting device 70 can be constituted by, for example, a personal computer.

As discussed above, according to the first modified example, by uploading the control program to the communication adapter manager 32, the communication adapter manager 32 can serve as the device identification code generator 33. Hence, the device-identification-code generating method can be modified by changing the control program that is uploaded to the communication adapter manager 32. Thus, a flexible operation of the network system is achievable. More specifically, the optimal device identification code can be generated for each device 40 by applying an optimal control program according to the device information of the electric device 40.

In addition, the same communication adapter 30 can be applied to different devices by uploading, to the communication adapter manager 32, the control program in accordance with the device.

Still further, the control program is downloadable without preparing the Internet setting and any predetermined setting devices by connecting the communication adapter to a device that is the download source, and downloading the program from this device.

### (Second Modified Example)

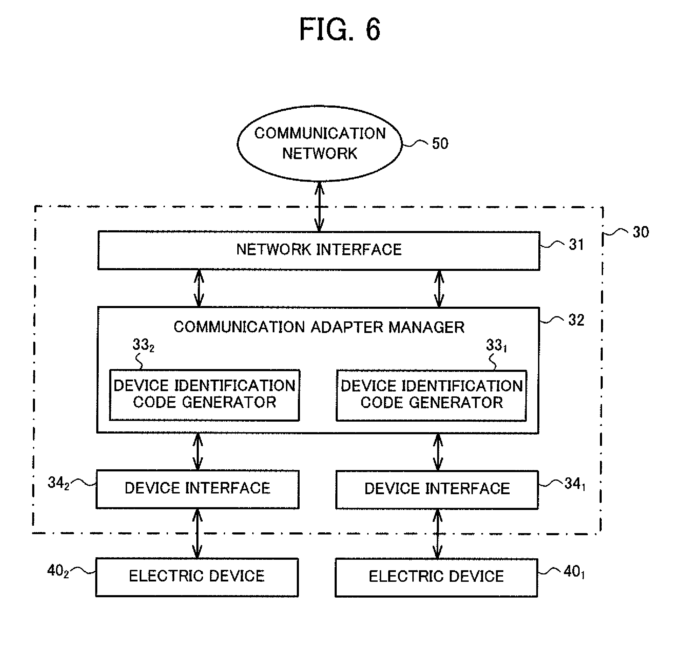

Hereinafter, a communication adapter 30 according to a second modified example will be described. As shown in FIG. 6, the communication adapter 30 of the second modified example connects a plurality of electric devices 40₁, 40₂ to the communication network 50. The communication adapter manager 32 includes a device identification code generator 33₁ that generates a device identification code of the electric device 40₁, and a device identification code generator 33₂ that generates a device identification code of the electric device 40₂.

According to the second modified example, a single communication adapter 30 can connect the plurality of electric devices 40 to the communication network 50, thereby simplifying the structure of network system 10.

### (Second Embodiment)

Hereinafter, a second embodiment of the present disclosure will be described with reference to the drawings. Note that the same or equivalent structures as those of the first embodiment will be denoted by the same reference numbers, and the duplicated discussion thereof will be omitted or simplified.

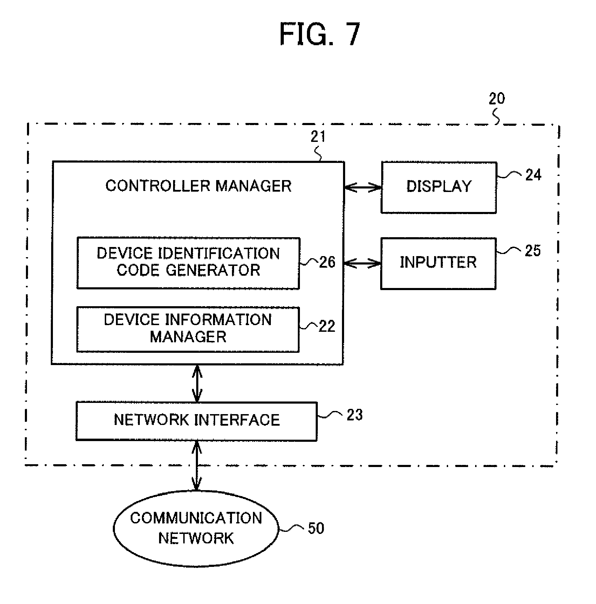

FIG. 7 is a block diagram illustrating a controller 20 of the second embodiment. As shown in FIG. 7, the controller 20 of the network system 10 of this embodiment differs from the controller 20 of the first embodiment in that the controller manager 21 constituting the controller 20 of the second embodiment includes a device identification code generator 26.

Hereinafter, an example operation of the controller 20 utilizing the device identification code generator 26 will be described. Note that, it is presumed that the device information containing the device identification code for the network-connected electric device has already been managed by the controller 20.

When a user inputs necessary information to generate the device identification code to the inputter 25, the device identification code generator 26 of the controller 20 generates a device identification code. Next, the controller 20 searches for, among the electric devices 40 managed by the controller 20, the electric device 40 that possesses the device identification code containing the same details. Subsequently, among the electric devices 40 that are to be managed, the controller 20 displays, on the display 24, a management number and the device identification code of the electric device 40 that uses a common identification number.

Note that the display 24 may display icons and the like representing the electric device 40 that is to be displayed. When the device identification name and the like are input by the user while the management number and the device identification code are displayed, the controller 20 may save the device information of ongoing display in association with the device identification name.

When, for example, the user inputs necessary information to generate the device information for an air conditioner in a living room, the controller 20 generates a device identification code, and displays corresponding management number and device identification code. When the user further inputs the device identification name such as, "living room air conditioner", the controller 20 manages the input device identification name in association with the device identification code. From this point on, the user can operate this electric device as the "living room air conditioner".

According to this embodiment, like the first embodiment, without making any alteration to the device structures, the controller 20 is identifiable of the electric device 40 with the device identification code in a unified format, thereby simplifying the controller structure. In addition, as discussed above, the controller 20 includes the device identification code generator 26 to generate the device identification code upon inputting by the user. Therefore, the user is easily recognizable of the correspondence between the device information that is managed by the controller 20 and the actual device.

Further, in this embodiment, the controller manager 21 generates the device identification code for identifying the electric device 40 based on the electric device information predefined for each electric device, more specifically, the identification code for identifying the manufacturer of the electric device 40, the identification code for identifying the device model of the electric device 40, the manufacturer's serial number of the electric device 40, and the like. Thus, it becomes unnecessary to provide, in the communication adapter 30 and the controller 20, any memory device to store the device identification code for identifying the electric device 40. Hence, the complexity of the network system 10 can be avoided. In addition, the electric device 40 constituting the network can be precisely identified with the device identification code.

Note that in this embodiment, generation of the device identification code by the controller manager 21 was described. However, the present disclosure is not limited to such case, and the controller manager 21 may acquire, from the electric device 40 via the communication adapter 30, the electric device information, such as the identification code for identifying the manufacturer of the electric device 40, the identification code for identifying the device model of the electric device 40, and the manufacture's serial number of the electric device 40, and generate the device identification code based on the acquired electric device information.

The embodiments of the present disclosure are discussed above, but the present disclosure is not limited to such specific embodiments above.

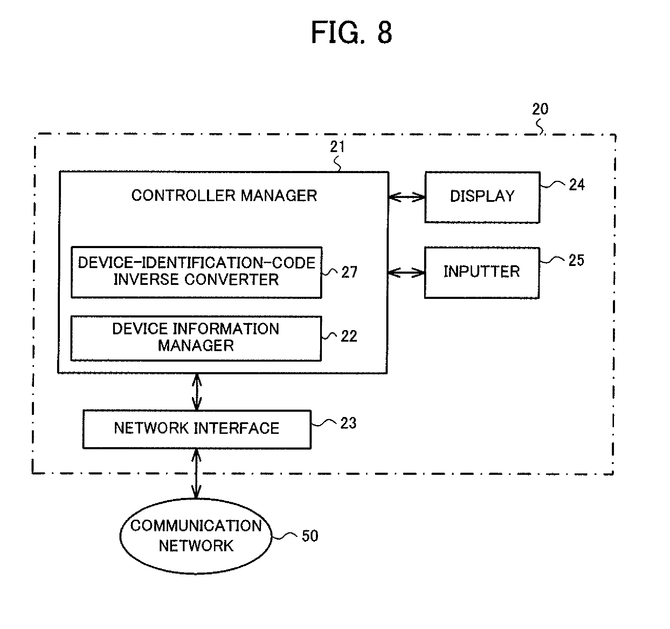

As shown in FIG. 8, for example, the controller manager 21 may include a device-identification-code inverse converter 27.

The device-identification-code inverse converter 27 converts the device identification code to information that is easy to understand for the user, and displays such information on the display 24. The device-identification-code inverse converter 27 displays, for example, a manufacturer's serial number corresponding to the device identification code on the display 24. Thus, the user can easily identify the electric device that corresponds to the device identification code.

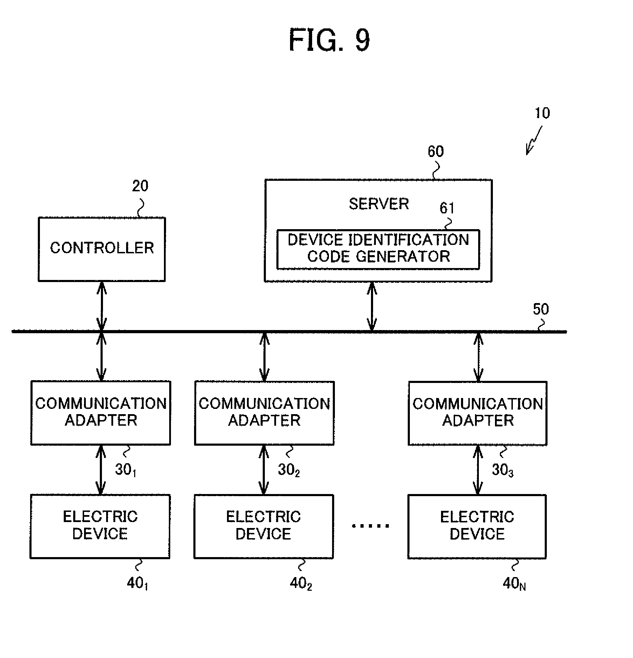

Still further, as shown in FIG. 9, the network system 10 may include a server 60 to allow the controller 20 to communicate with the server 60.

The server 60 includes a device identification code generator 61. Upon receiving, from the controller 20, information that is input through the inputter 25 and information acquired via the communication adapter 30, the device identification code generator 61 generates the device identification code for identifying the electric device 40 based on the received information. By acquiring information on the device identification code through the communication with the server 60, the controller 20 can communicate with each of the electric devices 40 and comprehensively control these electric devices 40. In addition, individual status and the like of the electric devices 40 can be displayed on the display 24.

As discussed above, when the network system 10 includes the server 60, it becomes unnecessary for the controller 20 to include the device identification code generator 33 that generates the device identification code in accordance with the device model. Hence, structures of the controller 20 and the communication adapter 30 can be simplified.

The electric device 40 of the above-discussed embodiment is not limited to an air conditioning device and a lighting device, but may be a solar power generating system, an electric hot water dispenser, an induction heating cooker, and the like. The network system of this embodiment enables an efficient control of these electric devices 40.

In addition, home-installed temperature sensor, illuminance sensor, and motion sensor functioning as the electric device 40 may be connected to the communication adapter 30. Accordingly, it becomes possible to control the electric devices, such as the air conditioning device and the like, based on an output by each sensor.

A function of the controller manager 21 and that of the communication adapter manager 32 of the embodiment described above can be realized by either special-purpose hardware resources and a normal computer system.

Various embodiments and modifications can be made in the present disclosure without departing from the spirit and the broad scope thereof The embodiments described above are intended for purposes of illustration only and are not intended to limit the scope of the present disclosure in any way. Therefore, the scope of the present disclosure is defined by the appended claims rather than the embodiments described above. Further, various modifications made within the scope of the claims and within the same purposes thereof should be included within the scope of the present disclosure.

### Industrial Applicability

The communication adapter of the present disclosure is suitable for connecting an electric device to a network. The controller of the present disclosure is suitable for controlling the electric device connected to the network. The network system of the present disclosure is suitable for operating the electric device.

### Reference Signs List

- 10: Network system
- 20: Controller
- 21: Controller manager
- 22: Device information manager
- 23: Network interface
- 24: Display
- 25: Inputter
- 26: Device identification code generator
- 27: Device-identification-code inverse converter
- 30: Communication adapter
- 31: Network interface
- 32: Communication adapter manager
- 33: Device identification code generator
- 34: Device interface
- 35: Download controller
- 40: Electric device
- 50: Communication network
- 60: Server
- 61: Device identification code generator
- 70: Setting device

## Claims

1. A communication adapter that connects an electric device to a network, the communication adapter comprising:
acquiring means that acquires device information on the electric device from the electric device; and
identification code generating means that generates, based on the device information, a device identification code for identifying the electric device over the network.

2. The communication adapter according to Claim 1, wherein the device information contains at least one of followings: information to identify a manufacturer of the electric device; information to identify a device model of the electric device; and a manufacture's serial number thereof.

3. The communication adapter according to Claim 1 or 2, wherein the identification code generating means generates the device identification code by running a program downloaded from either one of the electric device, the network, or a predetermined setting device.

4. A controller that controls an electric device constituting a network, the controller comprising:
possessing means that possesses a device identification code for identifying the electric device over the network, and a node identification code for identifying a communication adapter connecting the electric device to the network in association with each other; and
control means that specifies the electric device based on the device identification code and the node identification code possessed by the possessor, and controls the specified electric device.

5. The controller according to Claim 4, further comprising identification code generating means that generates, based on device information on the electric device, a device identification code for identifying the electric device over the network.

6. The controller according to Claim 5, further comprising acquiring means that acquires, from the electric device, device information on the electric device.

7. The controller according to Claim 5, further comprising inputting means to input the device information on the electric device.

8. The controller according to any one of Claims 4 to 7, further comprising displaying means that displays the device identification code and the device information on the electric device that corresponds to the device identification code.

9. A network system comprising:
a plurality of electric devices connected to a network via a communication adapter; and
a controller that controls each of the electric devices connected to the network,
wherein the controller identifies, based on a device identification code for identifying the electric device, the electric device over the network and controls the electric device, the device identification code being generated based on device information on the electric device.

10. The network system according to Claim 9, further comprising
a server that generates the device identification code,
wherein the controller identifies, based on the identification code transmitted from the server, the electric device over the network and controls the electric device.

11. The network system according to Claim 9 or 10, wherein
the electric device comprises any one of an air conditioning device, a solar power generating system, an electric hot water dispenser, an induction heating cooker, and a lighting device.
